# EUROPEAN PATENT SPECIFICATION

(11) **EP 3 428 826 B1**
(45) Date of publication and mention of the grant of the patent: **02.12.2020**
(21) Application number: 18169793.9
(22) Date of filing: 27.04.2018
(51) Int. Cl.: G06F 21/55, H04L 29/06, H04W 12/12

(54) **RANSOMWARE DETECTION APPARATUS AND OPERATING METHOD THEREOF**
RANSOMWARE-DETEKTIONSVORRICHTUNG UND BETRIEBSVERFAHREN DAFÜR
APPAREIL DE DÉTECTION DE RANCONGICIEL ET SON PROCÉDÉ DE FONCTIONNEMENT

(30) Priority: 10.07.2017 KR 20170087327; 24.04.2018 KR 20180047591
(43) Date of publication of application: 16.01.2019
(73) Proprietor: Electronics and Telecommunications Research Institute, Daejeon 34129 (KR)
(72) Inventor: CHOI, Doo Ho, Chungcheongnam-do 31184 (KR); KIM, Ik Kyun, Daejeon 34121 (KR); KIM, Jonghyun, Daejeon 34032 (KR); KIM, Taesung, Daejeon 35249 (KR); JIN, Seung Hun, Daejeon 35212 (KR)
(74) Representative: Betten & Resch

(56) References cited:
- WO-A1-2016/115280
- US-A1- 2003 097 595
- US-A1- 2010 235 913
- US-A1- 2016 378 988
- US-A1- 2017 147 815

## Description

### CROSS-REFERENCE TO RELATED APPLICATION

This application claims priority to and the benefit of Korean Patent Application Nos. 10-2017-0087327, and 10-2018-0047591 filed in the Korean Intellectual Property Office on July 10, 2017, and April 24, 2018.

### BACKGROUND OF THE INVENTION

### (a) Field of the Invention

The present invention relates to a ransomware detection apparatus and an operation method thereof.

### (b) Description of the Related Art

Ransomware is a malicious program that encrypts data of a user in a computer system and then requests money and has made trouble recently. Ransomware has penetrated a computer of the user in various ways as well as via e-mail, and its severity is increasing

However, there is no method of blocking ransomware by detecting whether the computer system has been infected by ransomware in advance or recognizing whether ransomware encrypts data in real time. After the data has been encrypted by ransomware once, since it is impossible to recover the data, and it causes much more damage than other malicious codes.

The above information disclosed in this Background section is only for enhancement of understanding of the background of the invention and therefore it may contain information that does not form the prior art that is already known in this country to a person of ordinary skill in the art.

The document WO 2016/115380 describes systems and methods for detecting malware. More particularly, the system includes a monitoring device that monitors side-channel activity of a target device. The monitoring device that can work in conjunction with (or independently of) a cloud-based security analytics engine to perform anomaly detection and classification on the side-channel activity. For example, the monitoring device can calculate a first set of features that are then transmitted to the security analytics engine for anomaly detection and classification.

Further, the document US 2017/0147815 describes a threat detecting apparatus. The threat detecting apparatus can include an interface circuit, an opcode detector, and a pattern analyzer. The interface circuit is configured to receive a data stream. The opcode detector can be configured to identify an opcode sequence embedded in the data stream based on a first model graph that includes a plurality of interconnected token nodes. Each token node is representative of an occurrence or a non-occurrence of a token. The pattern analyzer may be configured to identify an opcode signature embedded in the identified opcode sequence based on a second model graph, and to output a signal indicative of the successful identification of the opcode signature. The second model graph can include a plurality of interconnected opcode nodes, and each opcode node can be representative of an occurrence or a non-occurrence of a predetermined combination of one or more opcodes.

### SUMMARY OF THE INVENTION

The present invention has been made in an effort to provide an apparatus and method for detecting ransomware in real time or at the initial stage of encryption.

According to an embodiment of the present invention, a ransomware detection apparatus may include a frequency converter receiving an OP code currently being executed in a CPU and converting a signal of a value of the OP code into a frequency domain to generate a first OP code frequency waveform, a memory storing a second OP code frequency waveform, which is a value obtained by converting the OP code corresponding to a ransomware encryption algorithm into a frequency domain, and a ransomware determiner comparing the first OP code frequency waveform with the second OP code frequency waveform to determine whether ransomware operates.

The ransomware detection apparatus may further include an OP code decoder receiving a processor tracer packet corresponding to a calculation code from the CPU and decoding the processor trace packet into the calculation code, and then outputting the decoded calculation code to the frequency converter.

The ransomware determiner may calculate a degree of similarity between the first OP code frequency waveform and the second OP code frequency waveform and determine that ransomware operates when the degree of similarity exceeds a predetermined reference value.

The ransomware determiner may compare main frequencies between the first OP code frequency waveform and the second OP code frequency waveform and calculate a correlation coefficient to calculate the degree of similarity.

When the ransomware determiner determines that ransomware operates, the ransomware determiner may store the code currently being executed in the CPU in a recovery storage device.

When the ransomware determiner determines that ransomware operates, the ransomware determiner may request the CPU to stop a corresponding process.

The frequency converter may perform an FFT (Fast Fourier Transform) on the value of the OP code to generate the first OP code frequency waveform.

The value of the OP code may be a decimal number.

According to another embodiment of the present invention, a method of operating a ransomware detection apparatus that detects whether ransomware operates in a computer system comprising a CPU may include receiving a PT (processor tracer) packet currently being executed from the CPU, decoding the PT packet into an OP code (operation code), converting a signal of a value of the OP code into a frequency domain to generate a first OP code frequency waveform, storing a second OP code frequency waveform, which is a value obtained by converting the OP code corresponding to a ransomware encryption algorithm into a frequency domain, and comparing the first OP code frequency waveform with the second OP code frequency waveform to determine whether ransomware operates.

The determining may include calculating a degree of similarity between the first OP code frequency waveform and the second OP code frequency waveform, and determining that ransomware operates through the degree of similarity.

The method may further include when it is determined in the determining that ransomware operates, storing the code currently being executed in the CPU.

The method may further include when it is determined in the determining that ransomware operates, requesting the CPU to stop a corresponding process.

The generating of the first OP code frequency waveform may include considering the value of the OP code as a signal to convert the value of the OP code into the frequency domain.

According to another embodiment of the present invention, a method of operating an apparatus that detects whether ransomware operates in a CPU may include receiving an OP code currently being executed in the CPU, converting a signal of a value of the OP code into a frequency domain, and analyzing a first value corresponding to the frequency domain to determine whether ransomware operates.

The determining may include comparing a second value, which is a value obtained by converting the OP code corresponding to a ransomware encryption algorithm into the frequency domain with the first value to determine whether ransomware operates.

According to an exemplary embodiment of the present invention, ransomware may be determined in real time or at the initial stage of encryption by determining whether ransomware operates by performing a frequency analysis operation on an OP code generated in a CPU calculation process.

### BRIEF DESCRIPTION OF THE DRAWINGS

FIG. 1 is a diagram illustrating a relationship between a ransomware detection apparatus and a peripheral apparatus according to an exemplary embodiment of the present invention.
FIG. 2 is a diagram showing an example of a round iteration code for an encryption algorithm.
FIG. 3 is a diagram showing a signal of a value of an OP code.
FIG. 4 shows a waveform obtained by converting a signal waveform of FIG. 3 into a frequency domain.
FIG. 5 is a block diagram specifically illustrating the ransomware detection apparatus 100 according to an exemplary embodiment of the present invention.
FIG. 6 is a flowchart showing a ransomware detection method according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising", will be understood to imply the inclusion of stated elements but not the exclusion of any other elements.

The ransomware detection apparatus according to an exemplary embodiment of the present invention may detect ransomware by analyzing a CPU calculation characteristic generated in a data encryption process of software and recognizing encryption in real time or at the initial stage of encryption. The biggest characteristic when ransomware operates in a computer system is that ransomware performs an encryption process repeatedly. The ransomware detection apparatus and method according to an exemplary embodiment of the present invention uses the encryption characteristic of ransomware (that is, repetition of the encryption process), which will be described in detail.

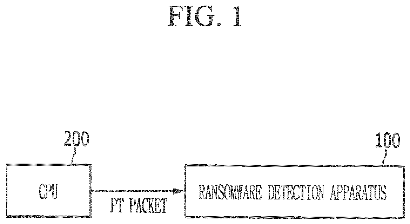

FIG. 1 is a diagram illustrating a relationship between a ransomware detection apparatus 100 and a peripheral apparatus according to an exemplary embodiment of the present invention.

A CPU 200 is a central processing unit in a computer system. The CPU 200 executes various instructions stored in a memory (not shown). In general, the CPU 200 provides a processor tracer (PT) packet. The PT packet provides information capable of decoding an operation code (hereinafter referred to as the 'OP code').

The ransomware detection apparatus 100 determines whether ransomware operates using the PT packet provided from the CPU 200. The ransomware detection apparatus 100 detects ransomware using the OP code after decoding the PT packet into the OP code. More specifically, the ransomware detection apparatus 100 determines whether encryption is being performed using a frequency characteristic on the OP code of an encryption algorithm used in ransomware and detects ransomware based on determination.

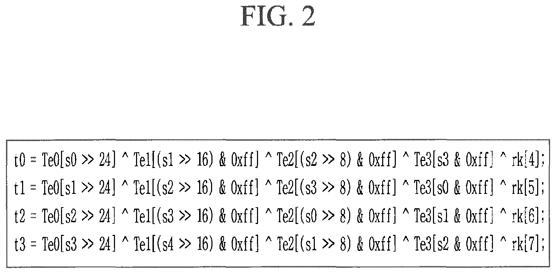

FIG. 2 is a diagram showing an example of a round iteration code for an encryption algorithm. For convenience of explanation, the encryption algorithm of FIG. 2 represents an AES (Advance Encryption Standard) 128 algorithm that is frequently used in ransomware, but other encryption algorithms (TEA, RC4, etc.) used in ransomware may also be applied to the present invention.

The AES 128 algorithm repeats the code shown in FIG. 2 10 times (i.e., round iteration of 10 times is used), and performs encryption on a 128-bit block. Also, AES192 uses round iteration of 12 times and AES256 uses round iteration of 14 times. The ransomware detection apparatus 100 according to an exemplary embodiment of the present invention considers a value of an OP code generated, as a signal, while the encryption algorithm is repeatedly performed to conduct a procedure.

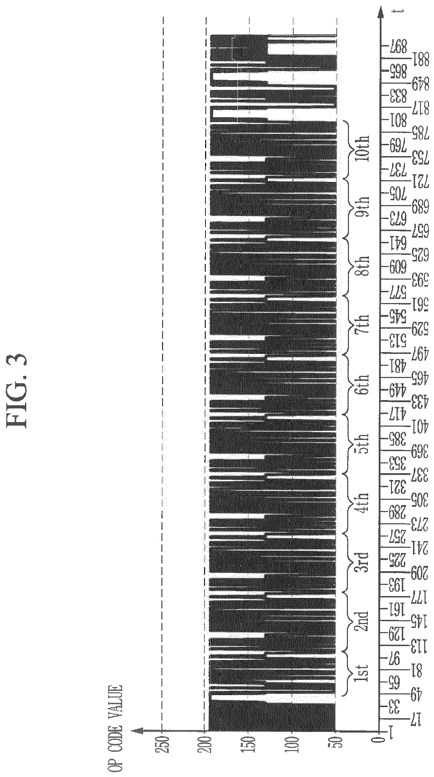

FIG. 3 is a diagram showing a signal of a value of an OP code. That is, FIG. 3 shows that the value of the OP code generated when an encryption algorithm of FIG. 2 is repeatedly performed 10 times is considered as a signal.

Table 1 below is a diagram of OP codes.

**(Table 1)**

| OP code(decimal) | Instruction |
|---|---|
| 403 | mov rdi, rsp |
| 67 | call 0x7f6fce38d9b0 |
| 639 | push rbp |
| 403 | mov rbp, rs p |
| 639 | push r15 |
| 639 | push r14 |
| 639 | push r13 |
| 639 | push r12 |
| 403 | mov r12, rdi |
| 639 | push rbx |
| 773 | sub rsp, 0x38 |
| 659 | rdtsc |
| 745 | shl rdx, 0x20 |
| 403 | mov eax, eax |
| 466 | or rax, rdx |
| 367 | lea rdx, ptr [rip+0x22449a] |
| 403 | mov qword ptr [rip+0x224283], rax |
| 403 | mov rax, qword ptr [rip+0x22448c] |
| 403 | mov r14, rdx |
| 773 | sub r14, qword ptr [rip+0x224612] |
| 403 | mov qword ptr [rip+0x224ff3], rdx |
| 787 | tes t rax, rax |
| 403 | mov qword ptr [rip+0x224fd9], r14 |
| 310 | jz 0x7f6fce38da92 |
| 367 | lea rex, ptr [rip+0x224634] |
| 403 | mov r9, 0x3800003d8 |
| 403 | mov r8, 0x37ffffb78 |
| 403 | mov esi, 0x6fffffff |
| 403 | mov r11d, 0x6ffffdff |

As shown in Table 1, the OP code may be expressed as a decimal number, and this OP code may be considered as one signal. When the decimal number which is the value of the OP code is considered as a signal value, the value of the OP code for the encryption algorithm of FIG. 2 may be converted into a signal waveform shown in FIG. 3. Since ransomware performs the encryption algorithm repeatedly, as shown in FIG. 3, the signal waveform of the OP code value has periodicity.

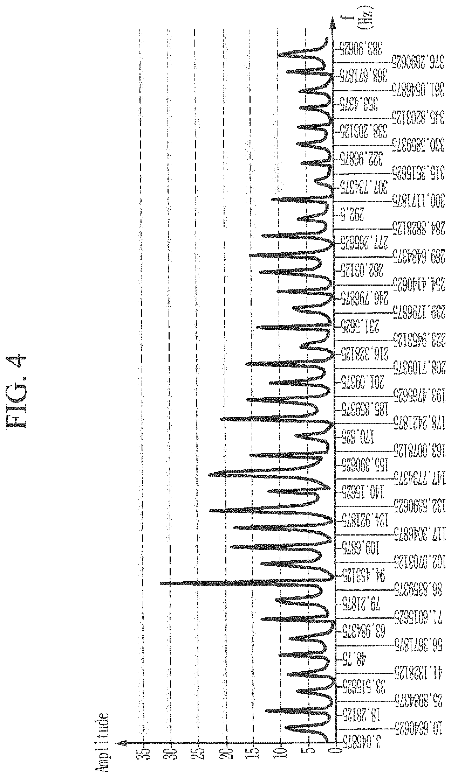

FIG. 4 shows a waveform obtained by converting a signal waveform of FIG. 3 into a frequency domain. That is, FIG. 4 shows that FFT (Fast Fourier Transform) is performed on the signal waveform of FIG. 3. Meanwhile, a FFT sampling size is 512 points in FIG. 4.

As shown in FIG. 4, the frequency transformed waveform has a periodic function frequency characteristic with high amplitude at a multiple of a basic frequency (the number of iterations of an encryption algorithm 10, 10 Hz).

The ransomware detection apparatus 100 according to an exemplary embodiment of the present invention detects whether it is ransomware using a characteristic of an OP code (i.e., a frequency characteristic of the OP code) in an encryption algorithm described in FIGS. 2 to 4.

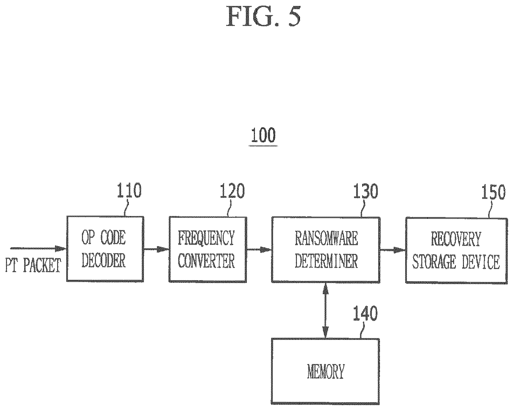

FIG. 5 is a block diagram specifically illustrating the ransomware detection apparatus 100 according to an exemplary embodiment of the present invention.

As shown in FIG. 5, the ransomware detection apparatus 100 according to an exemplary embodiment of the present invention includes an OP code decoder 110, a frequency converter 120, a ransomware determiner 130, a memory 140, and a recovery storage device 150.

The OP code decoder 110 receives a PT packet currently being executed from the CPU 200 and performs decoding on the received PT packet into an OP code. A method of decoding the PT packet into the OP code may be understood by one of ordinary skill in the art, and thus a detailed description thereof is omitted.

The frequency converter 120 receives the OP code from the OP code decoder 110 and performs conversion into a frequency domain by considering a value of the OP code as single signal. Ransomware repeatedly performs an encryption algorithm and thus the value of the OP code corresponding to the encryption algorithm has a periodic characteristic. For example, the value of the OP code for the AES 128 algorithm has a signal waveform as shown in FIG. 3, and the frequency converter 120 may obtain a waveform converted into the frequency domain as shown in FIG. 4. Meanwhile, the frequency converter 120 may perform frequency conversion using a FFT. Hereinafter, a value converted into the frequency domain by the frequency converter 120 is referred to as an 'OP code frequency waveform'.

The memory 140 previously stores an OP code frequency waveform corresponding to an encryption algorithm (for example, the AES 128 algorithm) used in a ransomware operation. That is, the memory 140 stores the frequency waveform as shown in FIG. 4.

The ransomware determiner 130 receives an input of the OP code frequency waveform from the frequency converter 120. The ransomware determiner 130 determine whether ransomware operates by comparing the OP code frequency waveform received from the frequency converter 120 with the OP code frequency waveform previously stored in the memory 140. In this regard, the ransomware determiner 130 may compare main frequencies between two OP code frequency waveforms (the OP code frequency waveform received from the frequency converter 120 and the OP code frequency waveform previously stored in the memory 140) and calculate a correlation coefficient between the two OP code frequency waveforms. The ransomware determiner 130 may calculate a degree of similarity through the compared main frequency and the calculated correlation coefficient and determine that ransomware currently operates when the degree of similarity exceeds a predetermined reference value. Then, the ransomware determiner 130 may determine that ransomware does not currently operate when the calculated degree of similarity is below the predetermined reference value.

Meanwhile, when the ransomware determiner 130 determines that ransomware currently operates, the ransomware determiner 130 may copy a code currently being executed in a memory (not shown) connected to the CPU 200 and stores the copied code in the recovery storage device 150. That is, the recovery storage device 150 stores the code related to the currently operating ransomware. A user may extract an encryption key by analyzing the code stored in the recovery storage device 150 and recover files infected by Ransomware using the extracted encryption key. The recovery storage device 150 may be implemented as nonvolatile memory. Then, when the ransomware determiner 130 determines that ransomware currently operates, the ransomware determiner 130 may request the CPU 200 to stop a corresponding process.

As described above, the ransomware detection apparatus 100 according to an exemplary embodiment of the present invention may determine whether ransomware operates by frequency-analyzing an OP code generated in a CPU calculation process, thereby determining ransomware in real time or at the initial stage of encryption.

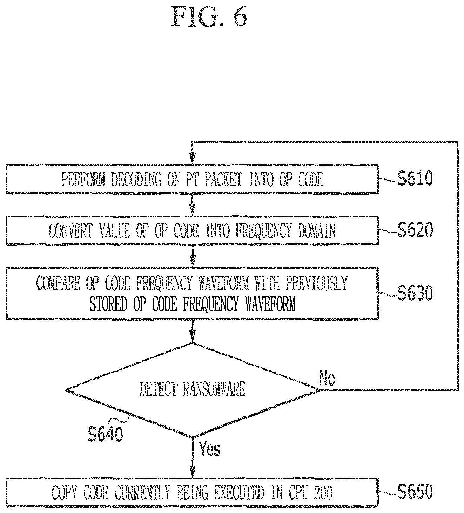

FIG. 6 is a flowchart showing a ransomware detection method according to an exemplary embodiment of the present invention.

The ransomware detection apparatus 100 receives a PT packet currently being executed from the CPU 200 and decodes the received PT packet into an OP code (S610). That is, the OP code decoder 110 decodes the PT packet received from the CPU 200 into the OP code.

The ransomware detection apparatus 100 considers the OP code as a signal and converts a value of the OP code into a frequency domain (S620). The OP code has a time sequentially input value, and thus the OP code may be considered as the signal. The frequency converter 120 converts the value of the OP code considered as the signal into a frequency waveform (an OP code frequency waveform). For example, in the case of the AES128 algorithm, the frequency converter 120 converts a signal in a time domain shown in FIG. 3 into the signal in the frequency domain shown in FIG. 4.

The ransomware detection apparatus 100 compares the OP code frequency waveform generated in step S620 with a previously stored OP code frequency waveform (S630). The OP code frequency waveform previously stored in the memory 140 is an OP code frequency waveform corresponding to an encryption algorithm used in a ransomware operation. That is, the ransomware determiner 130 may compare main frequencies between the two OP code frequency waveforms, calculate a correlation coefficient between the two OP code frequency waveforms, and calculate a degree of similarity of the two OP code frequency waveforms. If the calculated degree of similarity exceeds a predetermined reference value, the ransomware determiner 130 determines that ransomware currently operates.

If it is determined that a result of comparison in step S630 is ransomware, the ransomware detection apparatus 100 copies and stores the code currently being executed in the CPU 200 (S640 and S650). That is, when the ransomware determiner 130 determines that ransomware operates, the ransomware determiner 130 reads and copies code currently being executed in a memory (not shown) connected to the CPU 200, and stores the copied code in the recovery storage device 150. Then, when the ransomware detection apparatus 100 determines that the ransomware operates, the ransomware detection apparatus 100 requests the CPU 200 to stop a corresponding process.

If it is determined that the result of comparison in step S630 is not ransomware, the ransomware detection apparatus 100 returns back to step S610 (S640 and S610).

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A ransomware detection apparatus (100) comprising:
a frequency converter (120) receiving an OP code currently being executed in a CPU and converting a signal of a value of the OP code into a frequency domain to generate a first OP code frequency waveform,
a memory (140) storing a second OP code frequency waveform, which is a value obtained by converting the OP code corresponding to a ransomware encryption algorithm into a frequency domain, and
a ransomware determiner (130) comparing the first OP code frequency waveform with the second OP code frequency waveform to determine whether ransomware operates

2. The ransomware detection apparatus (100) of claim 1, further comprising:
an OP code decoder (110) receiving a processor tracer packet corresponding to a calculation code from the CPU and decoding the processor trace packet into the calculation code, and then outputting the decoded calculation code to the frequency converter (120).

3. The ransomware detection apparatus (100) of claim 1, wherein:
the ransomware determiner (130) calculates a degree of similarity between the first OP code frequency waveform and the second OP code frequency waveform and determines that ransomware operates when the degree of similarity exceeds a predetermined reference value.

4. The ransomware detection apparatus (100) of claim 3, wherein:
the ransomware determiner (130) compares main frequencies between the first OP code frequency waveform and the second OP code frequency waveform and calculates a correlation coefficient to calculate the degree of similarity.

5. The ransomware detection apparatus (100) of claim 1, wherein:
when the ransomware determiner (130) determines that ransomware operates, the ransomware determiner stores the code currently being executed in the CPU in a recovery storage device (150).

6. The ransomware detection apparatus (100) of claim 1, wherein:
when the ransomware determiner (130) determines that ransomware operates, the ransomware determiner requests the CPU to stop a corresponding process.

7. The ransomware detection apparatus (100) of claim 1, wherein:
the frequency converter (120) performs an FFT (Fast Fourier Transform) on the value of the OP code to generate the first OP code frequency waveform.

8. The ransomware detection apparatus (100) of claim 1, wherein:
the value of the OP code is a decimal number.

9. A method of operating an apparatus that detects whether ransomware operates in a CPU, the method comprising:
receiving an OP code currently being executed in the CPU,
converting a signal of a value of the OP code into a frequency domain, and
analyzing a first value corresponding to the frequency domain to determine whether ransomware operates.

10. The method of claim 9, wherein:
the determining comprises comparing a second value, which is a value obtained by converting the OP code corresponding to a ransomware encryption algorithm into the frequency domain with the first value to determine whether ransomware operates.

11. The method of claim 9, wherein the step of receiving an OP code further comprises:
receiving a PT (processor tracer) packet currently being executed from the CPU,
decoding (S610) the PT packet into an OP code (operation code), wherein the step of converting a signal of a value of the OP code further comprises: converting (S620) a signal of a value of the OP code into a frequency domain to generate a first OP code frequency waveform, wherein the step of analyzing a first value further comprises:
storing a second OP code frequency waveform, which is a value obtained by converting the OP code corresponding to a ransomware encryption algorithm into a frequency domain, and
comparing (S630) the first OP code frequency waveform with the second OP code frequency waveform to determine whether ransomware operates.

12. The method of claim 11, wherein:
the determining comprises,
calculating a degree of similarity between the first OP code frequency waveform and the second OP code frequency waveform, and
determining that ransomware operates through the degree of similarity.

13. The method of claim 11, further comprising:
when it is determined in the determining that ransomware operates, storing the code currently being executed in the CPU.

14. The method of claim 11, further comprising:
when it is determined in the determining that ransomware operates, requesting the CPU to stop a corresponding process.

15. The method of claim 11, wherein:
the generating of the first OP code frequency waveform comprises considering the value of the OP code as a signal to convert the value of the OP code into the frequency domain.

## Patentansprüche

1. Ransomware-Detektionsvorrichtung (100), die Folgendes umfasst:
einen Frequenzumsetzer (120), der einen OP-Code, der aktuell in einer CPU ausgeführt wird, empfängt und ein Signal eines Wertes des OP-Codes in einen Frequenzbereich umsetzt, um eine erste OP-Code-Frequenzwellenform zu erzeugen,
einen Speicher (140), der eine zweite OP-Code-Frequenzwellenform speichert, die ein Wert ist, der durch Umsetzen des OP-Codes, der einem Ransomware-Verschlüsselungsalgorithmus entspricht, in einen Frequenzbereich erhalten wird, und
eine Ransomware-Bestimmungseinrichtung (130), die die erste OP-Code-Frequenzwellenform mit der zweiten OP-Code-Frequenzwellenform vergleicht, um zu bestimmen, ob Ransomware arbeitet.

2. Ransomware-Detektionsvorrichtung (100) nach Anspruch 1, die ferner Folgendes umfasst:
einen OP-Code-Decodiereinrichtung (110), die ein Prozessorverfolgerpaket, das einem Berechnungscode von der CPU entspricht, empfängt und das Prozessorverfolgerpaket in den Berechnungscode decodiert und dann den decodierten Berechnungscode zu dem Frequenzumsetzer (120) ausgibt.

3. Ransomware-Detektionsvorrichtung (100) nach Anspruch 1, wobei:
die Ransomware-Bestimmungseinrichtung (130) einen Ähnlichkeitsgrad zwischen der ersten OP-Code-Frequenzwellenform und der zweiten OP-Code-Frequenzwellenform berechnet und bestimmt, dass Ransomware arbeitet, wenn der Ähnlichkeitsgrad einen vorgegebenen Bezugswert überschreitet.

4. Ransomware-Detektionsvorrichtung (100) nach Anspruch 3, wobei:
die Ransomware-Bestimmungseinrichtung (130) Hauptfrequenzen zwischen der ersten OP-Code-Frequenzwellenform und der zweiten OP-Code-Frequenzwellenform vergleicht und einen Korrelationskoeffizienten berechnet, um den Ähnlichkeitsgrad zu berechnen.

5. Ransomware-Detektionsvorrichtung (100) nach Anspruch 1, wobei:
dann, wenn die Ransomware-Bestimmungseinrichtung (130) bestimmt, dass Ransomware arbeitet, die Ransomware-Bestimmungseinrichtung den Code, der aktuell in der CPU ausgeführt wird, in einer Wiederherstellungs-Speichervorrichtung (150) speichert.

6. Ransomware-Detektionsvorrichtung (100) nach Anspruch 1, wobei:
dann, wenn die Ransomware-Bestimmungseinrichtung (130) bestimmt, dass Ransomware arbeitet, die Ransomware-Bestimmungseinrichtung die CPU auffordert, einen entsprechenden Prozess anzuhalten.

7. Ransomware-Detektionsvorrichtung (100) nach Anspruch 1, wobei:
der Frequenzumsetzer (120) eine FFT (schnelle Fourier-Transformation) an dem Wert des OP-Codes ausführt, um die erste OP-Code-Frequenzwellenform zu erzeugen.

8. Ransomware-Detektionsvorrichtung (100) nach Anspruch 1, wobei:
der Wert des OP-Codes eine Dezimalzahl ist.

9. Verfahren zum Betreiben einer Vorrichtung, die detektiert, ob in einer CPU Ransomware arbeitet, wobei das Verfahren Folgendes umfasst:
Empfangen eines OP-Codes, der aktuell in der CPU ausgeführt wird,
Umsetzen eines Signals eines Wertes des OP-Codes in einen Frequenzbereich und
Analysieren eines ersten Wertes, der dem Frequenzbereich entspricht, um zu bestimmen, ob Ransomware arbeitet.

10. Verfahren nach Anspruch 9, wobei:
das Bestimmen das Vergleichen eines zweiten Wertes, der ein Wert ist, der durch Umsetzen des OP-Codes, der einem Ransomware-Verschlüsselungsalgorithmus entspricht, in den Frequenzbereich erhalten wird, mit dem ersten Wert umfasst, um zu bestimmen, ob Ransomware arbeitet.

11. Verfahren nach Anspruch 9, wobei der Schritt des Empfangens eines OP-Codes ferner Folgendes umfasst:
Empfangen eines PT-Pakets (Prozessorverfolgerpaket), das aktuell von der CPU ausgeführt wird, und
Decodieren (S610) des PT-Pakets in einen OP-Code (Operationscode),
wobei der Schritt des Umsetzens eines Signals eines Wertes des OP-Codes ferner Folgendes umfasst:
Umsetzen (S620) eines Signals eines Wertes des OP-Codes in einen Frequenzbereich, um eine erste OP-Code-Frequenzwellenform zu erzeugen,
wobei der Schritt des Analysierens eines ersten Wertes ferner Folgendes umfasst:
Speichern einer zweiten OP-Code-Frequenzwellenform, die ein Wert ist, der durch Umsetzen des OP-Codes, der einem Ransomware-Verschlüsselungsalgorithmus entspricht, in einen Frequenzbereich erhalten wird, und
Vergleichen (S630) der ersten OP-Code-Frequenzwellenform mit der zweiten OP-Code-Frequenzwellenform, um zu bestimmen, ob Ransomware arbeitet.

12. Verfahren nach Anspruch 11, wobei das Bestimmen Folgendes umfasst:
Berechnen eines Ähnlichkeitsgrades zwischen der ersten OP-Code-Frequenzwellenform und der zweiten OP-Code-Frequenzwellenform und
Bestimmen anhand des Ähnlichkeitsgrades, dass Ransomware arbeitet.

13. Verfahren nach Anspruch 11, das ferner Folgendes umfasst:
dann, wenn während des Bestimmens festgestellt wird, dass Ransomware arbeitet, Speichern des Codes, der aktuell in der CPU ausgeführt wird.

14. Verfahren nach Anspruch 11, das ferner Folgendes umfasst:
dann, wenn während des Bestimmens festgestellt wird, dass Ransomware arbeitet, Auffordern der CPU, einen entsprechenden Prozess anzuhalten.

15. Verfahren nach Anspruch 11, wobei:
das Erzeugen der ersten OP-Code-Frequenzwellenform das Betrachten des Wertes des OP-Codes als ein Signal, um den Wert des OP-Codes in den Frequenzbereich umzusetzen, umfasst.

## Revendications

1. Appareil de détection de rançongiciel (100) comprenant:
un convertisseur de fréquence (120) recevant un code OP en cours d'exécution dans une unité centrale et convertissant un signal d'une valeur du code OP dans un domaine de fréquence pour générer une première forme d'onde de fréquence du code OP,
une mémoire (140) stockant une seconde forme d'onde de fréquence de code OP, qui est une valeur obtenue en convertissant le code OP correspondant à un algorithme de cryptage de rançongiciel dans un domaine de fréquence, et
un dispositif de détermination de rançongiciel (130) comparant la première forme d'onde de fréquence du code OP avec la seconde forme d'onde de fréquence du code OP pour déterminer si le rançongiciel fonctionne.

2. Appareil de détection de rançongiciel (100) selon la revendication 1, comprenant en outre:
un décodeur de code OP (110) recevant de l'unité centrale un paquet de traceur de processeur correspondant à un code de calcul et décodant le paquet de traceur de processeur en code de calcul, puis sortant le code de calcul décodé vers le convertisseur de fréquence (120).

3. Appareil de détection de rançongiciel (100) selon la revendication 1, dans lequel:
le dispositif de détermination de rançongiciel (130) calcule un degré de similitude entre la forme d'onde de fréquence du premier code OP et celle du second code OP
et détermine que le rançongiciel fonctionne lorsque le degré de similarité dépasse une valeur de référence prédéterminée.

4. Appareil de détection des logiciels de rançongiciel (100) selon la revendication 3, dans lequel:
le calculateur de rançongiciel (130) compare les fréquences principales entre la première forme d'onde de fréquence du code OP et la seconde forme d'onde de fréquence du code OP et calcule un coefficient de corrélation pour déterminer le degré de similitude.

5. Appareil de détection de rançongiciel (100) selon la revendication 1, dans lequel:
lorsque le dispositif de détermination de rançongiciel (130) détermine que le logiciel fonctionne, il stocke le code en cours d'exécution dans l'unité centrale dans un dispositif de stockage de récupération (150).

6. Appareil de détection de rançongiciel (100) selon la revendication 1, dans lequel:
lorsque le dispositif de détermination de rançongiciel (130) détermine qu'un rançongiciel fonctionne, il demande à l'unité centrale d'arrêter un processus correspondant.

7. Appareil de détection de rançongiciel (100) selon la revendication 1, dans lequel:
le convertisseur de fréquence (120) effectue une FFT (Fast Fourier Transform) sur la valeur du code OP pour générer la première forme d'onde de fréquence du code OP.

8. Appareil de détection de rançongiciel (100) selon la revendication 1. dans lequel:
la valeur du code OP est un nombre décimal.

9. Procédé de fonctionnement d'un appareil qui détecte si un tel rançongiciel fonctionne dans une unité centrale, la méthode comprenant:
la réception d'un code OP en cours d'exécution dans l'unité centrale,
la conversion d'un signal d'une valeur du code OP en un domaine de fréquences, et
l'analyse d'une première valeur correspondant au domaine de fréquence pour déterminer si un rançongiciel fonctionne.

10. Procédé selon la revendication 9,
dans lequel:
la détermination consiste à comparer une seconde valeur, qui est une valeur obtenue en convertissant le code OP correspondant à un algorithme de cryptage de rançongiciel dans le domaine des fréquences, avec la première valeur pour déterminer si le rançongiciel fonctionne.

11. Procédé selon la revendication 9, dans lequel l'étape de réception d'un code OP comprend en outre:
la réception d'un paquet PT (processor tracer) en cours d'exécution de la part de l'unité centrale,
le décodage (S610) du paquet PT en un code OP (code d'opération),
dans lequel l'étape de conversion d'un signal d'une valeur du code OP comprend en outre:
la conversion (S620) d'un signal d'une valeur du code OP en un domaine de fréquence pour générer une première forme d'onde de fréquence du code OP,
dans lequel l'étape d'analyse d'une première valeur comprend en outre:
le stockage d'une seconde forme d'onde de fréquence de code OP, qui est une valeur obtenue par conversion du code OP correspondant à un cryptage de rançonlogiciel dans un domaine de fréquences, et
en comparant (S630) la première forme d'onde de fréquence du code OP avec la seconde forme d'onde de fréquence du code OP pour déterminer si le rançongiciel fonctionne.

12. Procédé selon la revendication 11, dans lequel:
la détermination comprend,
le calcul d'un degré de similarité entre la première forme d'onde de fréquence du code OP et la seconde forme d'onde de fréquence du code OP, et
le fait de déterminer que le rançongiciel fonctionne par le degré de similitude.

13. Procédé selon la revendication 11, comprenant en outre:
lorsqu'il est déterminé dans la détermination que le rançongiciel fonctionne, en stockant le code en cours d'exécution dans l'unité centrale.

14. Procédé selon la revendication 11, comprenant en outre:
lorsqu'il est déterminé que le rançongiciel fonctionne, en demandant à l'unité centrale d'arrêter un processus correspondant.

15. Procédé selon la revendication 11, dans lequel:
la génération de la première forme d'onde de fréquence du code OP consiste à considérer la valeur du code OP comme un signal pour convertir la valeur du code OP dans le domaine des fréquences.
